# EUROPEAN PATENT APPLICATION

(11) **EP 4 149 189 A1**
(43) Date of publication of application: **15.03.2023**
(21) Application number: 21800897.7
(22) Date of filing: 28.04.2021
(51) Int. Cl.: H04W 72/04, H04L 5/00

(54) **DATA PROCESSING METHOD AND APPARATUS**

(30) Priority: 08.05.2020 CN 202010383945
(71) Applicant: Spreadtrum Communications (Shanghai) Co., Ltd., Shanghai 201203 (CN)
(72) Inventor: ZHOU, Huayu, Shanghai 201203 (CN); PAN, Zhengang, Shanghai 201203 (CN)
(74) Representative: Boult Wade Tennant LLP
(86) International application number: PCT/CN2021/090642
(87) International publication number: WO 2021/223641

(57) **Abstract**

Embodiments of the present application provide a method and apparatus for processing data, the method is applied to a terminal device and includes: obtaining a signaling; obtaining a value of a quasi co-location parameter Q based on the signaling. By obtaining the value of Q, it is possible to learn whether two synchronization signal blocks have quasi co-location relationship, or obtain a synchronization block index, or obtain beam repetition information of a synchronization signal block. In the embodiments of the present invention, the value of Q is obtained in a set of optional values of Q, thereby solving the problem of signaling overhead when there are more beams.

## Description

This application claims priority to Chinese Application No. 202010383945.1, filed to the China National Intellectual Property Administration on May 8, 2020 and entitled "Method and Apparatus for Processing Data", the content of which is incorporated herein by reference in its entirety.

### TECHNICAL FIELD

Embodiments of the present application relate to the field of communication technology, and in particular, to a method and apparatus for processing data.

### BACKGROUND

In an unlicensed spectrum, due to limitation of the power spectrum density (Power Spectrum Density, PSD), abase station often needs to perform beam repetition (beam repetition) to improve the coverage of a synchronization signal block.

In a new radio (New Radio, NR) release 16 (Release 16, R16) unlicensed spectrum, beam repetition information of a synchronization signal block is notified to a terminal device through a quasi co-location (Quasi Co-Location, abbreviated as QCL) relationship parameter Q of a synchronization signal block. For example, the QCL relationship parameter of a synchronization signal block is Q, the terminal device obtains a value of Q through a signaling transmitted by a base station, and if candidate synchronization signal block indexes of two synchronization signal blocks mod Q (divided by Qto take the remainders) have the same value, the two synchronization signal blocks are QCL, or are beam repeated, or have the same synchronization signal block index (also called beam index). The value of Q can be indicated in an information element (Information Element, IE) ssbPositionQCL-Relationship, or indicated through bit(s) or code point(s) (code point) in a master information block (Master Information Block, MIB).

In a high frequency spectrum, in order to support more beams for coverage, it is often needed to use more beams in an initial access stage. More beams would correspond to more synchronization signal blocks. When there are more beams, the largest synchronization signal block index is relatively large, correspondingly, the largest value of Qis relatively large, so that there are more optional values of Q, and potential signaling overhead for indicating the value of Q is relatively high. How to reduce signaling overhead when there are more beams is an urgent problem to be resolved.

### SUMMARY OF THE INVENTION

Embodiments of the present application provide a method and apparatus for data processing, so as to resolve the problem that signaling overhead is high when there are more beams.

In a first aspect, an embodiment of the present application provides a method for data processing, applied to a terminal device, including:
obtaining a signaling;
obtaining a value of a quasi co-location parameter Q based on the signaling.

In a possible implementation, the obtaining a value of a quasi co-location parameter Q based on the signaling includes:
obtaining, in a value set of Q, the value of Q based on the signaling.

In a possible implementation, the obtaining, in a value set of Q, the value of Q based on the signaling includes :
obtaining, in the value set of Q, the value of Q based on a bit or a code point in the signaling.

In a possible implementation, the signaling is a main information block, a system information block, or radio resource control information.

In a possible implementation, the value of Q belongs to a value set of Q.

In a possible implementation, elements in a value set of Q are candidate values of Q.

In a possible implementation, when a largest value of Q is M, elements in the value set of Q include: M/8, M/4, M/2 or M, where a value of M is one of 16, 32 or 64.

In a possible implementation,
elements in the value set of Q are from 1, 2, 4, 8, 16; or
elements in the value set of Q are from 1, 2, 4, 8, 16, 32; or
elements in the value set of Q are from 1, 2, 4, 8, 16, 32, 64.

In a possible implementation,
elements in the value set of Q are from 1, 2, 3, 4, 6, 12; or
elements in the value set of Q are from 1, 2, 3, 6, 9, 18; or
elements in the value set of Q are from 1, 2, 4, 5, 10, 20; or
elements in the value set of Q are from 1, 2, 3, 4, 6, 8, 12, 24; or
elements in the value set of Q are from 1, 2, 3, 5, 6, 10, 15, 30; or
elements in the value set of Q are from 1, 2, 3, 4, 6, 9, 12, 18, 36; or
elements in the value set of Q are from 1, 2, 4, 5, 10, 20, 40; or
elements in the value set of Q are from 1, 2, 3, 4, 6, 8, 12, 16, 24, 48; or
elements in the value set of Q are from 1, 2, 3, 6, 9, 18, 27, 54; or
elements in the value set of Q are from 1, 2, 3, 4, 5, 6, 10, 12, 15, 20, 30, 60.

In a possible implementation, elements in the value set of Q are four largest factors of a largest value of Q.

In a possible implementation,
elements in the value set of Q include 2, 4, 8, 16; or
elements in the value set of Q include 4, 8, 16, 32; or
elements in the value set of Q include 8, 16, 32, 64.

In a possible implementation,
elements in the value set of Q include 3, 4, 6, 12; or
elements in the value set of Q include 3, 6, 9, 18; or
elements in the value set of Q include 4, 5, 10, 20; or
elements in the value set of Q include 6, 8, 12, 24; or
elements in the value set of Q include 6, 10, 15, 30; or
elements in the value set of Q include 9, 12, 18, 36; or
elements in the value set of Q include 5, 10, 20, 40; or
elements in the value set of Q include 12, 16, 24, 48; or
elements in the value set of Q include 9, 18, 27, 54; or
elements in the value set of Q include 15, 20, 30, 60.

In a possible implementation, elements in the value set of Q at least include 1, a largest value of Q, or, first two or three largest factors of a largest value of Q.

In a possible implementation,
elements in the value set of Q include 1, 4, 8, 16; or
elements in the value set of Q include 1, 4, 16, 32, or, 1, 8, 16, 32; or
elements in the value set of Q include 1, 8, 32, 64, or, 1, 16, 32, 64.

In a possible implementation,
elements in the value set of Q include 1, 3, 6, 12, or, 1, 4, 6, 12; or
elements in the value set of Q include 1, 3, 9, 18, or, 1, 6, 9, 18; or
elements in the value set of Q include 1, 4, 10, 20, or, 1, 5, 10, 20; or
elements in the value set of Q include 1, 4, 12, 24, or, 1, 6, 12, 24, or, 1, 8, 12, 24; or
elements in the value set of Q include 1, 5, 15, 30, or, 1, 6, 15, 30, or, 1, 10, 15, 30; or
elements in the value set of Q include 1, 6, 18, 36, or, 1, 9, 18, 36, or, 1, 12, 18, 36; or
elements in the value set of Q include 1, 4, 20, 40, or, 1, 5, 20, 40, or, 1, 10, 20, 40; or
elements in the value set of Q include 1, 8, 24, 48, or, 1, 12, 24, 48, or, 1, 16, 24, 48; or
elements in the value set of Q include 1, 6, 27, 54, or, 1, 9, 27, 54, or, 1, 18, 27, 54; or
elements in the value set of Q include 1, 12, 30, 60, or, 1, 15, 30, 60, or, 1, 20, 30, 60.

In a second aspect, an embodiment of the present application provides an apparatus for processing data, including:
an obtaining module, configured to obtain a signaling;
a processing module, configured to obtain a value of a quasi co-location parameter Q based on the signaling.

In a possible implementation, the processing module is specifically configured to:
obtain, in a value set of Q, the value of Q based on the signaling.

In a possible implementation, the processing module is specifically configured to:
obtain, in the value set of Q, the value of Q based on a bit or a code point in the signaling.

In a possible implementation, the signaling is a main information block, a system information block, or radio resource control information.

In a possible implementation, the value of Q belongs to a value set of Q.

In a possible implementation, elements in a value set of Q are candidate values of Q.

In a possible implementation, when a largest value of Q is M, the value of Q includes: M/8, M/4, M/2 or M, where a value of M is one of 16, 32 or 64.

In a possible implementation,
elements in the value set of Q are from 1, 2, 4, 8, 16; or
elements in the value set of Q are from 1, 2, 4, 8, 16, 32; or
elements in the value set of Q are from 1, 2, 4, 8, 16, 32, 64.

In a possible implementation,
elements in the value set of Q are from 1, 2, 3, 4, 6, 12; or
elements in the value set of Q are from 1, 2, 3, 6, 9, 18; or
elements in the value set of Q are from 1, 2, 4, 5, 10, 20; or
elements in the value set of Q are from 1, 2, 3, 4, 6, 8, 12, 24; or
elements in the value set of Q are from 1, 2, 3, 5, 6, 10, 15, 30; or
elements in the value set of Q are from 1, 2, 3, 4, 6, 9, 12, 18, 36; or
elements in the value set of Q are from 1, 2, 4, 5, 10, 20, 40; or
elements in the value set of Q are from 1, 2, 3, 4, 6, 8, 12, 16, 24, 48; or
elements in the value set of Q are from 1, 2, 3, 6, 9, 18, 27, 54; or
elements in the value set of Q are from 1, 2, 3, 4, 5, 6, 10, 12, 15, 20, 30, 60.

In a possible implementation, elements in the value set of Q are four largest factors of a largest value of Q.

In a possible implementation,
elements in the value set of Q include 2, 4, 8, 16; or
elements in the value set of Q include 4, 8, 16, 32; or
elements in the value set of Q include 8, 16, 32, 64.

In a possible implementation,
elements in the value set of Q include 3, 4, 6, 12; or
elements in the value set of Q include 3, 6, 9, 18; or
elements in the value set of Q include 4, 5, 10, 20; or
elements in the value set of Q include 6, 8, 12, 24; or
elements in the value set of Q include 6, 10, 15, 30; or
elements in the value set of Q include 9, 12, 18, 36; or
elements in the value set of Q include 5, 10, 20, 40; or
elements in the value set of Q include 12, 16, 24, 48; or
elements in the value set of Q include 9, 18, 27, 54; or
elements in the value set of Q include 15, 20, 30, 60.

In a possible implementation, elements in the value set of Q at least include 1, a largest value of Q, or, first two or three largest factors of a largest value of Q.

In a possible implementation,
elements in the value set of Q include 1, 4, 8, 16; or
elements in the value set of Q include 1, 4, 16, 32, or, 1, 8, 16, 32; or
elements in the value set of Q include 1, 8, 32, 64, or, 1, 16, 32, 64.

In a possible implementation,
elements in the value set of Q include 1, 3, 6, 12, or, 1, 4, 6, 12; or
elements in the value set of Q include 1, 3, 9, 18, or, 1, 6, 9, 18; or
elements in the value set of Q include 1, 4, 10, 20, or, 1, 5, 10, 20; or
elements in the value set of Q include 1, 4, 12, 24, or, 1, 6, 12, 24, or, 1, 8, 12, 24; or
elements in the value set of Q include 1, 5, 15, 30, or, 1, 6, 15, 30, or, 1, 10, 15, 30; or
elements in the value set of Q include 1, 6, 18, 36, or, 1, 9, 18, 36, or, 1, 12, 18, 36; or
elements in the value set of Q include 1, 4, 20, 40, or, 1, 5, 20, 40, or, 1, 10, 20, 40; or
elements in the value set of Q include 1, 8, 24, 48, or, 1, 12, 24, 48, or, 1, 16, 24, 48; or
elements in the value set of Q include 1, 6, 27, 54, or, 1, 9, 27, 54, or, 1, 18, 27, 54; or
elements in the value set of Q include 1, 12, 30, 60, or, 1, 15, 30, 60, or, 1, 20, 30, 60.

In a third aspect, an embodiment of the present application provides a terminal device, including: at least one processor and a memory; where
the memory stores computer instructions; and
the at least one processor executes the computer instructions stored in the memory, to enable the at least one processor to execute the method for processing data of any one of implementations as described in the first aspect.

In a fourth aspect, an embodiment of the present application provides a computer readable storage medium, the computer readable storage medium stores computer instructions, and when a processor executes the computer instructions, the processor executes the method for processing data of any one of implementations as described in the first aspect.

The method and apparatus for processing data provided in the embodiments of the present application, are applied to a terminal device. The terminal device firstly obtains a signaling from a network device, and then obtains a value of a quasi co-location parameter Q based on the signaling. By obtaining the value of Q, the terminal device is possible to learn whether two synchronization signal blocks have a quasi co-location relationship, or obtain a synchronization block index, or obtain beam repetition information of a synchronization signal block. In the embodiments of the present application, the value of Q is obtained through a signaling transmitted by a network device, thereby solving the problem of signaling overhead when there are more beams.

### BRIEF DESCRIPTION OF DRAWINGS

FIG. 1 is a schematic diagram of an application scenario provided by an embodiment of the present application.
FIG. 2 is a flow diagram of a method for processing data provided by an embodiment of the present application.
FIG. 3 is a flow diagram of a method for obtaining a value of Q provided by an embodiment of the present application.
FIG. 4 is a structural diagram of an apparatus for processing data provided by an embodiment of the present application.
FIG. 5 is a hardware structure diagram of a terminal device provided by an embodiment of the present application.

### DESCRIPTION OF EMBODIMENTS

In order to make purposes, technical solutions and advantages of the embodiments of the present application more clear, the technical solutions of the embodiments of the present application will be described clearly and completely below with reference to the drawings of the embodiments of the present application. Obviously, the described embodiments are a part of embodiments of the present application, rather than all of embodiments. Based on the embodiments of the present application, all other embodiments obtained by those of ordinary skill in the art without paying creative effort shall fall within the protection scope of the present application.

For ease of understanding, the concepts involved in the present application are explained first.

Terminal device: it could be a device that includes wireless transceiving functions and can cooperate with a network device to provide communication services for users. Specifically, the terminal device can refer to a user equipment (User Equipment, UE), an access terminal, a user unit, a user station, a mobile station, a mobile station, a remote station, a remote terminal, a mobile device, a user terminal, a terminal, a wireless communication device, a user agent or a user apparatus. For example, the terminal device could be a cellular phone, a cordless phone, a session initiation protocol (Session Initiation Protocol, SIP) phone, a wireless local loop (Wireless Local Loop, WLL) station, a personal digital processing (Personal Digital Assistant, PDA), a handheld device with wireless communication function, a computing device or other processing device connected to a wireless modem, a vehicle-mounted device, a wearable device, a terminal device in a future 5G network or in a network after 5G.

Network device: it could be a device used to communicate with a terminal device. For example, it could be a base station (Base Transceiver Station, BTS) in a global system for mobile communication (Global System for Mobile Communication, GSM) or in a code division multiple access (Code Division Multiple Access, CDMA) system, or a base station (NodeB, NB) in a wideband code division multiple access (Wideband Code Division Multiple Access, WCDMA) system, or an evolutional base station (Evolutional NodeB, eNB or eNodeB) in an LTE system, or, the network device could be a relay station, an access point, a vehicle-mounted device, a wearable device, or a network side device in a future 5G network or in a network after 5G, or a network device in a future evolutional public land mobile network (Public Land Mobile Network, PLMN) network.

The network device in the embodiments of the present application may also refer to a radio access network (Radio Access Network, RAN) device. The RAN device, which is connected to a terminal device, is used to receive data from the terminal device and send the data to a core network device. The RAN device corresponds to different devices in different communication systems. For example, it corresponds a base station and a base station controller in a 2G system, corresponds to a base station and a radio network controller (Radio Network Controller, RNC) in a 3G system, corresponds to an evolutional base station (Evolutional Node B, eNB) in a 4G system, and corresponds to, for example, an access network device (e.g., gNB, centralized unit CU, distributed unit DU) in a 5G system such as NR.

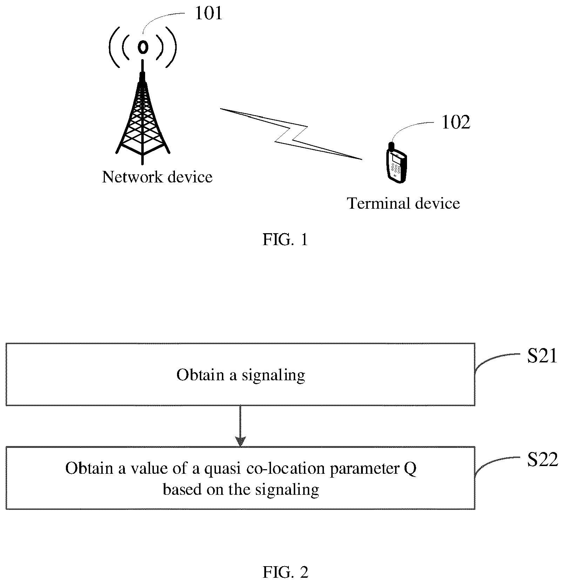

With reference to FIG. 1, the scenario, in which the method of the present application is applied, is illustrated as follows.

FIG. 1 is a schematic diagram of an application scenario provided by an embodiment of the present application. As shown in FIG. 1, the application scenario includes a network device 101 and a terminal device 102, and the network device 101 can communicate with the terminal device 102 wirelessly.

The network includes the network device 101 and the terminal device 102, and can also be called a non-terrestrial network (Non-Terrestrial network, NTN), where the NTN is a communication network between the terminal device and a satellite (also called network device).

It is understandable that the technical solutions provided by the embodiments of the present application, can be applied in communication technology of NR, where the NR is a new generation of wireless access network technology, and can be applied in a future evolutional network, such as the future 5th generation mobile communication (the 5th Generation Mobile Communication, 5G) system. The technical solutions in the embodiments of the present application can also be applied to other wireless communication networks such as the wireless fidelity (Wireless Fidelity, WIFI) or the long term evolution (Long Term Evolution, LTE) or the like, and corresponding names can also be replaced by names of the corresponding functions in other wireless communication networks.

The network architectures and the application scenarios described in the embodiments of the present application are for the sake of explaining the technical solutions in the embodiments of the present application more clearly, rather than limitations to the technical solutions in the embodiments. Those of ordinary skills in the art know that, with the evolution of network architectures and the emergence of new application scenarios, the technical solutions in the embodiments of the present application are also used for similar problems.

In Release 15 (Release 15, R15) of NR, the synchronization signal and the broadcast channel form a synchronization signal block, for introducing the function of beam sweeping.

Through the primary synchronization signal (Primary Synchronization Signal, PSS) and the secondary synchronization signal (Secondary Synchronization Signal, SSS), UE obtains time-frequency synchronization of a cell and a physical layer cell ID of the cell. This process is generally called cell search (cell search).

The PSS, the SSS, and the physical broadcast channel (Physical Broadcast Channel, PBCH) form an SS/PBCH block (synchronization signal block).

Each synchronization signal block has a time domain location predetermined. The time domain location can also be called a candidate synchronization signal block. Multiple synchronization signal blocks form an SS-burst (synchronization signal burst). Multiple synchronization signal blocks form a synchronization signal burst. Multiple synchronization signal bursts form an SS-burst-set (synchronization signal burst set). The Lmax time domain positions of the synchronization signal block are fixed within a window of 5ms. The Lmax time domain position indexes of the synchronization signal block are in a consecutive order from 0 to Lmax-1. Therefore, the transmitting time of a synchronization signal block in the window of 5ms is fixed, and the indexes are also fixed.

Generally speaking, a base station transmits a synchronization signal block through beam sweeping (beam sweeping). That is, the base station transmits the synchronization signal block through different beams at different time domain positions. Accordingly, UE can measure different beams and sense at which beam the strongest signal is received.

In a licensed spectrum of NR (NR licensed spectrum, also called unshared spectrum access), a UE obtains timing information within 5 ms by acquiring candidate synchronization signal block indexes. In a licensed spectrum, the candidate synchronization signal block indexes are related to the Lmax candidate positions of the synchronization signal block. When Lmax=4, the lower two bits (2 LSBs) of a candidate synchronization signal block index are carried in a PBCH-DMRS (demodulation reference signal of PBCH); when Lmax>4, the lower three bits (3 LSBs) of a candidate synchronization signal block index are carried in the PBCH-DMRS; when Lmax=64, the higher 3 bits (3 MSBs) of a candidate synchronization signal block index are in PBCH payload (payload) or carried in an MIB. In this case, the number of candidate synchronization signal block indexes is equal to the number of synchronization signal block indexes.

In an unlicensed spectrum of NR (NR unlicensed spectrum, NR-U, also called shared spectrum access), a UE obtains timing information within 5ms by acquiring candidate synchronization signal block indexes. In an unlicensed spectrum, the candidate synchronization signal blocks within a half frame are numbered in the order from 0 to Lmax-1. When the subcarrier spacing of the synchronization signal blocks is 15 kHz, Lmax=10; when the subcarrier spacing of the synchronization signal blocks is 30 kHz, Lmax=20. The UE determines, through the index of a PBCH DMRS sequence (one-to-one mapping), the 3 LSB bits of a candidate synchronization signal block index within a half frame. For Lmax=10, UE determines, through the bit a̅_{A̅+7} of PBCH payload, 1 MSB bit of a candidate synchronization signal block index within a half frame. For Lmax=20, UE determines, through the bits a̅_{A̅+6},a̅_{A̅+7} of PBCH payload, 2 MSB bits of a candidate synchronization signal block index within a half frame.

In an unlicensed spectrum of NR, a candidate synchronization signal block index is different with a synchronization signal block index. The candidate synchronization signal block index represents an index of a synchronization signal block in a candidate position, while the synchronization signal block index represents a beam index of a synchronization block. In this case, the number of candidate synchronization signal block indexes may be greater than the number of synchronization signal block indexes. The synchronization signal block can be a synchronization signal block within a window (such as a discovery burst transmission window), so as to reduce the number of candidate synchronization signal block indexes and reduce UE complexity.

In an unlicensed spectrum, before transmitting a synchronization signal block, a base station needs to conduct listen before talk (Listen Before Talk, LBT) or conduct channel access assessment (Channel Access Assessment, CAA). The base station can transmit a synchronization block once it detects that the channel is available. It is because of the LBT that a window needs to be predefined, where there are more candidate positions (or indexes) for a synchronization signal block within the window than the number of synchronization signal blocks that need to be transmitted actually. When detecting that a channel is busy, the base station can continue listening until a channel is detected to be available, and then transmits a synchronization signal block in the subsequent candidate positions for the synchronization signal block.

On the other hand, in an unlicensed spectrum, due to limited power spectrum density (Power Spectrum Density, PSD), it is difficult to use more and narrower beams to meet coverage requirement, so the base station often needs to perform beam repetition (beam repetition) to improve the coverage of synchronization signal blocks. Generally, the base station can inform UE beam repetition information of synchronization signal blocks, so that the UE knows which measurement values of the synchronization signal blocks can be averaged when measuring (the measurement values of the synchronization signal blocks transmitted by the same beam can be averaged). The base station can also have more PDCCH transmitting occasions associated with the synchronization signal blocks, since the UE needs to listen to multiple PDCCHs associated with multiple synchronization signal blocks transmitted by the same beam

In R16 NR-U, beam repetition information of a synchronization signal block is notified to UE through a QCL (Quasi Co-Location, quasi co-location) relationship parameter of the synchronization signal block. For example, the QCL relationship parameter of the synchronization signal block is Q, and the UE obtains the value of Q through a signaling of a base station. If candidate synchronization signal block indexes of two synchronization signal blocks mod Q (divided by Q to take the remainders) have the same value, the two synchronization signal blocks are QCL, or are beam repeated, or have the same synchronization signal block index (also called beam index).

In general, the value of the candidate synchronization signal block index mod Q is called a synchronization signal block index (also called a beam index). The largest synchronization signal block index is equal to the largest value of Q. The optional values of Q are integer factors of the largest value of Q. For example, in an unlicensed spectrum of Release 16 NR, the largest value of Q is 8, and the optional values of Q are 8, 4, 2, 1. In Release 16 NR-U, a master information block (Master Information Block, MIB) uses only 2 bits or 4 code points (code point) to indicate the optional values of Q. Generally speaking, when the number of bits is x, the number of code points (the coded possibility) is 2 to the power of x.

In a high frequency band, such as a spectrum of 52.6GHz-71GHz, there are high frequency band characteristics, and the unlicensed spectrum (unlicensed spectrum) access technology can be adopted. Due to the fact of high frequency band, more beams are needed to achieve better coverage. Generally speaking, a base station can realize an initial access with more beams by using more beams to transmit synchronization signal blocks, so that the UE can receive at least one synchronization signal block transmitted by a beam at different directions of a cell. When there are more beams, the largest synchronization block index is relatively large, and the corresponding largest value of Q is relatively large. For example, when the largest value of Q is 64, there are more optional values of Q, and the signaling overhead for indicating potential values of Q is relatively high. How to reduce the signaling overhead when there are more beams is an urgent problem to be solved.

To solve the above problem, the embodiments of the present application provide a method for processing data, so as to determine an optional value of Q when there are more beams. The technical solutions of the present application are illustrated below with reference to the drawings.

FIG. 2 is a flow diagram of a method for processing data provided in an embodiment of the present application. The method is applied to a terminal device. As shown in FIG. 2, the method may include as follows.
S21, obtain a signaling;
S22, obtain a value of a quasi co-location parameter Q based on the signaling.

A terminal device can obtain a value of Q through a signaling. After obtaining the value of Q, the terminal device may judge whether two synchronization signal blocks have a quasi co-location relationship. For example, based on the candidate synchronization signal block indexes of the synchronization signal blocks mod the value of Q (that is, divided by the value of Q to take the remainder), if the candidate synchronization signal block indexes of two synchronization signal blocks mod the value of Q have the same value, the two synchronization signal blocks have a quasi co-location relationship. Alternatively, it is possible to determine a synchronization signal block index based on the value of Q. For example, based on the candidate synchronization signal block index mod the value of Q (that is, divided by the value of Q to take the remainder), the result obtained is a synchronization signal block index. Alternatively, beam repetition information of a synchronous signal block may be obtained based on the value of Q. For example, it is possible to make the candidate synchronization signal block indexes mod the value of Q (that is, divided by the value of Q to take the remainder), if the candidate synchronization signal block indexes of two synchronization signal blocks mod the value of Q have the same value, the two synchronization signal blocks are beam repeated.

Exemplarily, the terminal device may obtain, in a value set of Q, the value of Q based on the signaling transmitted by a network device.

Exemplarily, there are four optional values of Q, and by determining the four optional values of Q, the signaling overhead can be reduced.

Optionally, it is possible to obtain, in a value set of Q, the value of Q based on a bit or a code point in the signaling. For example, the terminal device may obtain 2 bits from the signaling transmitted by a network device, and determine the value of Q based on the 2 bits, where the 2 bits may correspond to 4 optional values of Q. Thus, the signaling overhead by the 2 bits in the signaling can be reduced.

Optionally, the signaling is a master information block (Master Information Block, MIB). The terminal device may obtain the bit(s) or code point(s) from the MIB, and obtain, in a value set of Q, the value of Q based on the bit(s). The terminal device may quickly obtain the value of Q of a serving cell through the MIB.

Optionally, the signaling is a system information block (System Information Block, SIB). The terminal device may obtain the value of Q of a neighbor cell through the SIB, which is beneficial for cell reselection.

Optionally, the signaling is radio resource control (Radio Resource Control, RRC) information. The terminal device may obtain the value of Q of a target cell when switching through RRC information, which is beneficial for switching.

The embodiments of the present application provide a method for processing data, which is applied to a terminal device and includes: firstly obtaining a signaling from a network device, and then obtaining a value of a quasi co-location relationship parameter Q based on the signaling. By obtaining the value of Q, it is possible to learn whether two synchronization signal blocks have a quasi co-location relationship, or obtain a synchronization signal block index, or obtain beam repetition information of a synchronization signal block. In the embodiments of the present application, it is possible to obtain a value of Q through a signaling transmitted by a network device, thus solving the problem of signaling overhead when there are more beams.

Technical solutions in the present application are illustrated in detail as follows, combining with specific embodiments.

After obtaining a signaling from a network device, a terminal device needs to obtain a value of Q from a value set of Q based on the signaling. Where the value of Q belongs to the value set of Q. Alternatively, elements in the value set of Q are candidate values of Q. The value set of Q includes a plurality of different elements. The largest value of Q is a possible largest value of Q predefined. The largest value of Q is generally the largest synchronization signal block index, or the largest number of beams for synchronization signal blocks. In general, the largest value of the elements in the value set of Q is equal to the largest value of Q. In the following, the value ranges of the elements in the value set of Q in different cases will be introduced in the first place.

In a possible implementation, elements in the value set of Q are from all factors of the largest value of Q. Here, factor B of integer A indicates that the integer A is divisible by B. The reason why the elements in the value set of Q are from all factors of the largest value of Q is that, if the elements in the value set of Q are all factors of the largest value of Q, after candidate synchronization signal block positions (indexes) are divided into multiple groups based on the largest value of Q, the synchronization signal block indexes of the same position in each group may be the same.

In an optional implementation, when the largest value of Q is M, optional values of Q include: M/8, M/4, M/2, or M, where a value of M is any one of 16, 32, or 64.

Optionally, when the largest value of Q is 16, elements in the value set of Q are from 1, 2, 4, 8, 16, that is, optional values of Q are from 1, 2, 4, 8, 16. In the present invention, elements in the value set of Q are from a, b, c, that is, optional values of Q are selected from a, b, c, representing that the elements in the value set of Q can be selected from the set {a, b, c}.

Optionally, when the largest value of Q is 32, elements in the value set of Q are from 1, 2, 4, 8, 16, 32, that is, optional values of Q are selected from 1, 2, 4, 8, 16, 32.

Optionally, when the largest value of Q is 64, elements in the value set of Q are from 1, 2, 4, 8, 16, 32, 64, that is, optional values of Q are selected from 1, 2, 4, 8, 16, 32, 64.

In a possible implementation, the largest value of Q can be any one of 12, 18, 20, 24, 30, 36, 40, 48, 54 or 60.

Optionally, when the largest value of Q is 12, elements in the value set of Q are from 1, 2, 3, 4, 6, 12, that is, optional values of Q are selected from 1, 2, 3, 4, 6, 12.

Optionally, when the largest value of Q is 18, elements in the value set of Q are from 1, 2, 3, 6, 9, 18, that is, optional values of Q are selected from 1, 2, 3, 6, 9, 18.

Optionally, when the largest value of Q is 20, elements in the value set of Q are from 1, 2, 4, 5, 10, 20, that is, optional values of Q are selected from 1, 2, 4, 5, 10, 20.

Optionally, when the largest value of Q is 24, elements in the value set of Q are from 1, 2, 3, 4, 6, 8, 12, 24, that is, optional values of Q are selected from 1, 2, 3, 4, 6, 8, 12, 24.

Optionally, when the largest value of Q is 30, elements in the value set of Q are from 1, 2, 3, 5, 6, 10, 15, 30, that is, optional values of Q are selected from 1, 2, 3, 5, 6, 10, 15, 30.

Optionally, when the largest value of Q is 36, elements in the value set of Q are from 1, 2, 3, 4, 6, 9, 12, 18, 36, that is, optional values of Q are selected from 1, 2, 3, 4, 6, 9, 12, 18, 36.

Optionally, when the largest value of Q is 40, elements in the value set of Q are from 1, 2, 4, 5, 10, 20, 40, that is, optional values of Q are selected from 1, 2, 4, 5, 10, 20, 40.

Optionally, when the largest value of Q is 48, elements in the value set of Q are from 1, 2, 3, 4, 6, 8, 12, 16, 24, 48, that is, optional values of Q are selected from 1, 2, 3, 4, 6, 8, 12, 16, 24, 48.

Optionally, when the largest value of Q is 54, elements in the value set of Q are from 1, 2, 3, 6, 9, 18, 27, 54, that is, optional values of Q are selected from 1, 2, 3, 6, 9, 18, 27, 54.

Optionally, when the largest value of Q is 60, elements in the value set of Q are from 1, 2, 3, 4, 5, 6, 10, 12, 15, 20, 30, 60, that is, optional values of Q are selected from 1, 2, 3, 4, 5, 6, 10, 12, 15, 20, 30, 60.

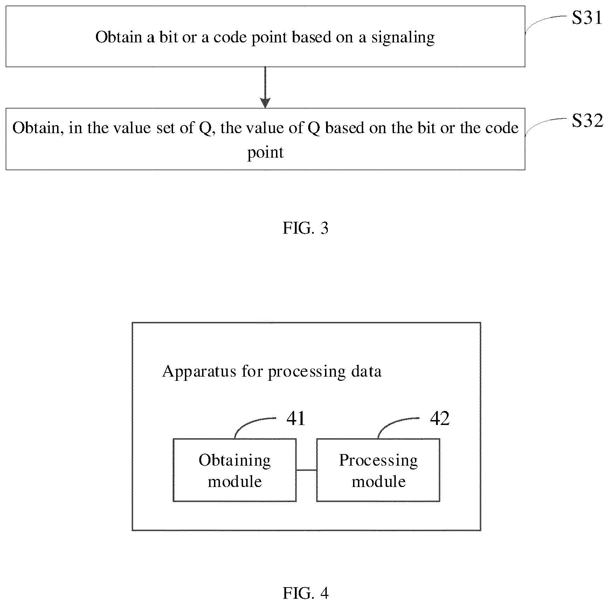

The value of Q belongs to a value set of Q. Elements in the value set of Q are candidate values of Q. Therefore, after determining the value set of Q, it is possible to obtain in the value set of Q the value of Q. Description is made with reference to FIG. 3 in the following.

FIG. 3 is a flow diagram of a method for obtaining a value of Q provided by an embodiment of the present application, as shown in FIG. 3, including as follows.

S31, obtain a bit or a code point based on a signaling.

The signaling is a signaling transmitted by a network device to a terminal device. It is possible to obtain a bit or a code point through the signaling, and determine the value of Q based on the bits or the code point.

S32, obtain, in the value set of Q, the value of Q based on the bit or the code point.

It is possible to obtain, in the value set of Q, the value of Q based on the bit. For example, the terminal device obtains 2 bits or 4 code points and determines the corresponding 4 optional values of Q based on the 2 bits.

After determining the value range of elements in the value set of Q, it is possible to further determine the value set of Q. In this way, the range of optional values of Q can be narrowed down and the signaling overhead can be saved. Determination of the value set of Q is described as follows.

In a possible implementation, elements in the value set of Q include four largest factors of the largest value of Q, where:
when the largest value of Q is 16, or when elements in the value set of Q are from 1, 2, 4, 8, 16, the elements in the value set of Q include 2, 4, 8, 16;
when the largest value of Q is 32, or when elements in the value set of Q are from 1, 2, 4, 8, 16, 32, the elements in the value set of Q include 4, 8, 16, 32;
when the largest value of Q is 64, or when elements in the value set of Q are from 1, 2, 4, 8, 16, 32, 64, the elements in the value set of Q include 8, 16, 32, 64;
when the largest value of Q is 12, or when elements in the value set of Q are from 1, 2, 3, 4, 6, 12, the elements in the value set of Q include 3, 4, 6, 12;
when the largest value of Q is 18, or when elements in the value set of Q are from 1, 2, 3, 6, 9, 18, the elements in the value set of Q include 3, 6, 9, 18;
when the largest value of Q is 12 , or when elements in the value set of Q are from 1, 2, 4, 5, 10, 20, the elements in the value set of Q include 4, 5, 10, 20;
when the largest value of Q is 24, or when elements in the value set of Q are from 1, 2, 3, 4, 6, 8, 12, 24, the elements in the value set of Q include 6, 8, 12, 24;
when the largest value of Q is 30, or when elements in the value set of Q are from 1, 2, 3, 5, 6, 10, 15, 30, the elements in the value set of Q include 6, 10, 15, 30;
when the largest value of Q is 36, or when elements in the value set of Q are from 1, 2, 3, 4, 6, 9, 12, 18, 36, the elements in the value set of Q include 9, 12, 18, 36;
when the largest value of Q is 40, or when elements in the value set of Q are from 1, 2, 4, 5, 10, 20, 40, the elements in the value set of Q include 5, 10, 20, 40;
when the largest value of Q is 48, or when elements in the value set of Q are from 1, 2, 3, 4, 6, 8, 12, 16, 24, 48, the elements in the value set of Q include 12, 16, 24, 48;
when the largest value of Q is 54, or when elements in the value set of Q are from 1, 2, 3, 6, 9, 18, 27, 54, the elements in the value set of Q include 9, 18, 27, 54;
when the largest value of Q is 60, or when elements in the value set of Q are from 1, 2, 3, 4, 5, 6, 10, 12, 15, 20, 30, 60, the elements in the value set of Q include 15, 20, 30, 60.

Since a larger value of Q represents a smaller number of repeated beams, it is more suitable for a high-frequency environment by selecting the four largest factors of the largest value of Q, and a larger value of Q can reduce complexity of a terminal device. For example, it can reduce the number of type0-physical downlink control channels (Type0-Physical Downlink Control Channel, Type0-PDCCH) to be monitored, since UE needs to monitor Type0-PDCCHs associated with synchronization signal blocks having a QCL relationship.

It is possible to determine the elements in the value set of Q in other ways, in addition to selecting 4 largest factors of the largest value of Q.

In a possible implementation, the elements in the value set of Q at least include 1, the largest value of Q, or, first two or three largest factors of the largest value of Q. Where the elements in the value set of Q may include any one of the three of 1, the largest Q value, and the first two or three largest factors of the largest value of Q; the elements in the value set of Q may also include any two of the three of 1, the largest Q value, and the first two or three largest factors of the largest Q value; or, the elements in the value set of Q may include 1, the largest Q value, and the first two or three largest factors of the largest value of Q.

In a possible implementation, the elements in the value set of Q may at least include the largest value of Q. The largest value of Q represents the largest number of beams that a network device (base station) can transmit. The largest value of Q indicates the smallest number of repeated beams, which is more suitable for a high-frequency environment. Moreover, a larger value of Q can reduce complexity of a terminal device, for example, the number of Type0-PDCCHs that need to be monitored can be reduced.

In a possible implementation, the elements in the value set of Q may at least include 1. The value of Q being 1 represents that all beams are repeated, which is suitable for a scenario of omnidirectional transmission, i.e., a single beam

In a possible implementation, the elements in the value set of Q may at least include the first two or three largest factors of the largest value of Q. In this way, it can be ensured that optional values of Q are large enough, while making it free to select other types of values of Q.

In a possible implementation, the elements in the value set of Q at least include 1, the largest value of Q, or, the first two or three largest factors of the largest value of Q, where:
when the largest value of Q is 16, or when elements in the value set of Q are from 1, 2, 4, 8, 16, the elements in the value set of Q include 1, 4, 8, 16;
when the largest value of Q is 32, or when elements in the value set of Q are from 1, 2, 4, 8, 16, 32, the elements in the value set of Q include 1, 4, 16, 32, or, 1, 8, 16, 32;
when the largest value of Q is 64, or when elements in the value set of Q are from 1, 2, 4, 8, 16, 32, 64, the elements in the value set of Q include 1, 8, 32, 64, or, 1, 16, 32, 64;
when the largest value of Q is 12, or when elements in the value set of Q are from 1, 2, 3, 4, 6, 12, the elements in the value set of Q include 1, 3, 6, 12, or, 1, 4, 6, 12;
when the largest value of Q is 18, or when elements in the value set of Q are from 1, 2, 3, 6, 9, 18, the elements in the value set of Q include 1, 3, 9, 18, or, 1, 6, 9, 18;
when the largest value of Q is 20, or when elements in the value set of Q are from 1, 2, 4, 5, 10, 20, the elements in the value set of Q include 1, 4, 10, 20, or, 1, 5, 10, 20;
when the largest value of Q is 24, or when elements in the value set of Q are from 1, 2, 3, 4, 6, 8, 12, 24, the elements in the value set of Q include 1, 4, 12, 24, or, 1, 6, 12, 24, or, 1, 8, 12, 24;
when the largest value of Q is 30, or when elements in the value set of Q are from 1, 2, 3, 5, 6, 10, 15, 30, the elements in the value set of Q include 1, 5, 15, 30, or, 1, 6, 15, 30, or, 1, 10, 15, 30;
when the largest value of Q is 36, or when elements in the value set of Q are from 1, 2, 3, 4, 6, 9, 12, 18, 36, the elements in the value set of Q include 1, 6, 18, 36, or, 1, 9, 18, 36, or, 1, 12, 18, 36;
when the largest value of Q is 40, or when elements in the value set of Q are from 1, 2, 4, 5, 10, 20, 40, the elements in the value set of Q include 1, 4, 20, 40, or, 1, 5, 20, 40, or, 1, 10, 20, 40;
when the largest value of Q is 48, or when elements in the value set of Q are from 1, 2, 3, 4, 6, 8, 12, 16, 24, 48, the elements in the value set of Q include 1, 8, 24, 48, or, 1, 12, 24, 48, or, 1, 16, 24, 48;
when the largest value of Q is 54, or when elements in the value set of Q are from 1, 2, 3, 6, 9, 18, 27, 54, the elements in the value set of Q include 1, 6, 27, 54, or, 1, 9, 27, 54, or, 1, 18, 27, 54;
when the largest value of Q is 60, or when elements in the value set of Q are from 1, 2, 3, 4, 5, 6, 10, 12, 15, 20, 30, 60, the elements in the value set of Q include 1, 12, 30, 60, or, 1, 15, 30, 60, or, 1, 20, 30, 60.

The method for processing data provided in the embodiments of the present application is applied to a terminal device, where the terminal device firstly obtains a signaling from a network device, and then obtains a value of a quasi co-location parameter Q based on the signaling. By obtaining the value of Q, it is possible to learn whether two synchronous signal blocks have a quasi co-location relationship, or obtain a synchronization signal block index, or obtain beam repetition information of a synchronous signal block. In the embodiments of the present application, the value of Q is obtained through a signaling transmitted by a network device, thereby solving the problem of signaling overhead when there are more beams.

FIG. 4 is a structure diagram of an apparatus for processing data provided by an embodiment of the present application. As shown in FIG. 4, the apparatus includes an obtaining module 41 and a processing module 42, where:
the obtaining module 41 is configured to obtain a signaling;
the processing module 42 is configured to obtain a value of a quasi co-located parameter Q based on the signaling.

In a possible implementation, the processing module 42 is specifically configured to:
obtain, in a value set of Q, the value of Q based on the signaling.

In a possible implementation, the processing module 42 is specifically configured to:
obtain, in the value set of Q, the value of Q based on a bit or a code point in the signaling.

In a possible implementation, the signaling is a main information block, a system information block, or radio resource control information.

In a possible implementation, the value of Q belongs to a value set of Q.

In a possible implementation, elements in a value set of Q are candidate values of Q.

In a possible implementation, when a largest value of Q is M, elements in the value set of Q include: M/8, M/4, M/2 or M, where a value of M is one of 16, 32 or 64.

In a possible implementation,
elements in the value set of Q are from 1, 2, 4, 8, 16; or
elements in the value set of Q are from 1, 2, 4, 8, 16, 32; or
elements in the value set of Q are from 1, 2, 4, 8, 16, 32, 64.

In a possible implementation,
elements in the value set of Q are from 1, 2, 3, 4, 6, 12; or
elements in the value set of Q are from 1, 2, 3, 6, 9, 18; or
elements in the value set of Q are from 1, 2, 4, 5, 10, 20; or
elements in the value set of Q are from 1, 2, 3, 4, 6, 8, 12, 24; or
elements in the value set of Q are from 1, 2, 3, 5, 6, 10, 15, 30; or
elements in the value set of Q are from 1, 2, 3, 4, 6, 9, 12, 18, 36; or
elements in the value set of Q are from 1, 2, 4, 5, 10, 20, 40; or
elements in the value set of Q are from 1, 2, 3, 4, 6, 8, 12, 16, 24, 48; or
elements in the value set of Q are from 1, 2, 3, 6, 9, 18, 27, 54; or
elements in the value set of Q are from 1, 2, 3, 4, 5, 6, 10, 12, 15, 20, 30, 60.

In a possible implementation, elements in the value set of Q are four largest factors of a largest value of Q.

In a possible implementation,
elements in the value set of Q include 2, 4, 8, 16; or
elements in the value set of Q include 4, 8, 16, 32; or
elements in the value set of Q include 8, 16, 32, 64.

In a possible implementation,
elements in the value set of Q include 3, 4, 6, 12; or
elements in the value set of Q include 3, 6, 9, 18; or
elements in the value set of Q include 4, 5, 10, 20; or
elements in the value set of Q include 6, 8, 12, 24; or
elements in the value set of Q include 6, 10, 15, 30; or
elements in the value set of Q include 9, 12, 18, 36; or
elements in the value set of Q include 5, 10, 20, 40; or
elements in the value set of Q include 12, 16, 24, 48; or
elements in the value set of Q include 9, 18, 27, 54; or
elements in the value set of Q include 15, 20, 30, 60.

In a possible implementation, elements in the value set of Q at least include 1, a largest value of Q, or, first two or three largest factors of a largest value of Q.

In a possible implementation,
elements in the value set of Q include 1, 4, 8, 16; or
elements in the value set of Q include 1, 4, 16, 32, or, 1, 8, 16, 32; or
elements in the value set of Q include 1, 8, 32, 64, or, 1, 16, 32, 64.

In a possible implementation,
elements in the value set of Q include 1, 3, 6, 12, or, 1, 4, 6, 12; or
elements in the value set of Q include 1, 3, 9, 18, or, 1, 6, 9, 18; or
elements in the value set of Q include 1, 4, 10, 20, or, 1, 5, 10, 20; or
elements in the value set of Q include 1, 4, 12, 24, or, 1, 6, 12, 24, or, 1, 8, 12, 24; or
elements in the value set of Q include 1, 5, 15, 30, or, 1, 6, 15, 30, or, 1, 10, 15, 30; or
elements in the value set of Q include 1, 6, 18, 36, or, 1, 9, 18, 36, or, 1, 12, 18, 36; or
elements in the value set of Q include 1, 4, 20, 40, or, 1, 5, 20, 40, or, 1, 10, 20, 40; or
elements in the value set of Q include 1, 8, 24, 48, or, 1, 12, 24, 48, or, 1, 16, 24, 48; or
elements in the value set of Q include 1, 6, 27, 54, or, 1, 9, 27, 54, or, 1, 18, 27, 54; or
elements in the value set of Q include 1, 12, 30, 60, or, 1, 15, 30, 60, or, 1, 20, 30, 60.

The apparatus provided in the embodiments of the present application may be used to implement the technical solutions of the method in the above embodiments, and its implementation principle and technical effect are similar, which are not repeated herein.

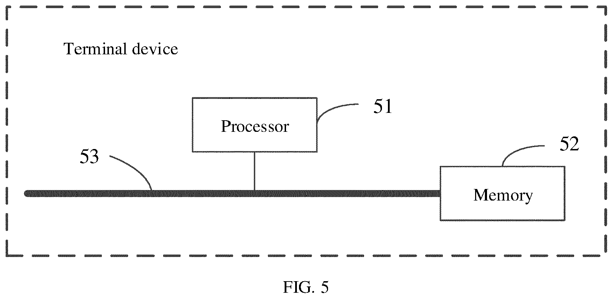

FIG. 5 is a schematic diagram of a hardware structure of a terminal device provided by an embodiment of the present application. As shown in FIG. 5, the terminal device includes: at least one processor 51 and a memory 52. Where the processor 51 and the memory 52 are connected through a bus 53.

Optionally, the model determination further includes a communication component. For example, the communication component may include a receiver and/or transmitter.

In a specific implementation, the at least one processor 51 executes the computer execution instructions stored in the memory 52, such that the at least one processor 51 executes the above method for processing data.

For the specific implementation process of the processor 51, reference may be made to the above method in the embodiments, and the implementation principle and the technical effect are similar, which are not repeated herein.

In the embodiment as shown in the above FIG. 5, it should be understood that the processor may be a central processing unit (English: Central Processing Unit, abbreviation: CPU), or other general processors, a digital signal processor (English: Digital Signal Processor, abbreviation: DSP), an application specific integrated circuit (English: Application Specific Integrated Circuit, Abbreviation: ASIC) and so on. A general processor may be a microprocessor or may also be any conventional processor, or the like. The steps with reference to the method disclosed in the present application may be directly reflected as executions by a hardware processor, or by a combination of hardware and a software module in a processor.

The memory may include a high-speed RAM memory, and may also include a non-transitory storage NVM, e.g., at least one disk memory.

The bus may be an industry standard architecture (Industry Standard Architecture, ISA) bus, a peripheral component (Peripheral Component, PCI) bus, or an extended industry standard architecture (Extended Industry Standard Architecture, EISA) bus, or the like. The bus may include an address bus, a data bus, a control bus, and so on. For ease of representation, the bus in the drawings of the present application is not limited to only one bus or one type of bus.

The present application also provides a computer-readable storage medium, where the computer-readable storage medium stores computer execution instructions. When the processor executes the computer execution instructions, the method for processing data described above is implemented.

The computer-readable storage medium, or the readable storage medium, may be implemented by any type of transitory storage device or non-transitory storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk or an optical disk. The readable storage medium may be any available medium that may be accessed by a general or specialized computer.

An exemplary readable storage medium is coupled to a processor, so as to enable the processor to read information from the readable storage medium and to write information to the readable storage medium. Of course, the readable storage medium may also be part of the processor. The processor and the readable storage medium may be located in application specific integrated circuits (Application Specific Integrated Circuits, abbreviated: ASIC). Of course, the processor and the readable storage medium may also exist in a device as discrete components.

The division of a unit is only a logical functional division, and there may be other division methods in actual implementations, for example, a plurality of units or components may be combined or may be integrated into another system, or some features may be ignored, or not executed. In addition, the mutual coupling or direct coupling or communication connection represented or discussed may be indirect coupling or communication connection through some interfaces, devices or units, which may be in an electrical, mechanical form or in other forms.

The units described as discrete components may or may not be discrete in physical, and the component displayed as a unit may or may not be a physical unit, i.e., may be located in one place, or may also be distributed to a plurality of network units. Some or all of the units may be selected based on actual needs to achieve the purpose of the scheme in the embodiments of the present application.

Further, the functional units in the embodiments of the present application may be integrated in one processing unit, or may exist discretely in physical, or two or more units may be integrated in one unit.

The function, if realized in the form of a software functional unit and sold or used as a stand-alone product, may be stored in a computer-readable storage medium. Based on such understanding, the technical solution of the present application in nature or the part that contributes to the prior art or a part of the technical solution may be embodied in the form of a software product. The computer software product is stored in a storage medium, and includes a number of instructions to enable a computer device (may be a personal computer, a server, or a network device, etc.) to perform all or part of the steps of the method described in the embodiments of the present application. The aforementioned storage medium includes a U disk, a removable hard disk, a read-only memory (ROM, Read-Only Memory), a random access memory (RAM, Random Access Memory), a disk or an optical disk and other mediums that may store program codes.

Those of ordinary skill in the art may understand that all or part of the steps for realizing the method in each of the above embodiments may be implemented by a hardware related to program instructions. The aforementioned program may be stored in a computer-readable storage medium. When the program is executed, the steps in the method in each of the above embodiments are executed. The aforementioned storage medium includes: an ROM, an RAM, a disk or an optical disk and other mediums that may store program codes.

Finally, it should be noted that the above embodiments are only used to illustrate the technical solutions of the present application, not to limit them. Although the present application is described in detail with reference to the aforementioned embodiments, those of ordinary skill in the art should understand that he may modify the technical solutions described in the aforementioned embodiments, or equivalently replace some or all of the technical features thereof. These modifications or replacements do not make the essence of corresponding technical solutions depart from the scope of the technical solutions in the embodiments of the present application.

## Claims

1. A method for processing data, applied to a terminal device, comprising:
obtaining a signaling;
obtaining a value of a quasi co-location parameter Q based on the signaling.

2. The method of claim 1, wherein the obtaining a value of a quasi co-location parameter Q based on the signaling comprises:
obtaining, in a value set of Q, the value of Q based on the signaling.

3. The method of claim 2, wherein the obtaining, in a value set of Q, the value of Q based on the signaling comprises:
obtaining, in the value set of Q, the value of Q based on a bit or a code point in the signaling.

4. The method of claim 2 or 3, wherein the signaling is a main information block, a system information block, or radio resource control information.

5. The method of claim 1, wherein the value of Q belongs to a value set of Q.

6. The method of claim 1, wherein elements in a value set of Q are candidate values of Q.

7. The method of claim 5 or 6, wherein when a largest value of Q is M, the value of Q comprises: M/8, M/4, M/2 or M, wherein a value of M is one of 16, 32 or 64.

8. The method of claim 5 or 6, wherein,
elements in the value set of Q are from 1, 2, 4, 8, 16; or
elements in the value set of Q are from 1, 2, 4, 8, 16, 32; or
elements in the value set of Q are from 1, 2, 4, 8, 16, 32, 64.

9. The method of claim 5 or 6, wherein,
elements in the value set of Q are from 1, 2, 3, 4, 6, 12; or
elements in the value set of Q are from 1, 2, 3, 6, 9, 18; or
elements in the value set of Q are from 1, 2, 4, 5, 10, 20; or
elements in the value set of Q are from 1, 2, 3, 4, 6, 8, 12, 24; or
elements in the value set of Q are from 1, 2, 3, 5, 6, 10, 15, 30; or
elements in the value set of Q are from 1, 2, 3, 4, 6, 9, 12, 18, 36; or
elements in the value set of Q are from 1, 2, 4, 5, 10, 20, 40; or
elements in the value set of Q are from 1, 2, 3, 4, 6, 8, 12, 16, 24, 48; or
elements in the value set of Q are from 1, 2, 3, 6, 9, 18, 27, 54; or
elements in the value set of Q are from 1, 2, 3, 4, 5, 6, 10, 12, 15, 20, 30, 60.

10. The method of claim 5 or 6, wherein elements in the value set of Q are four largest factors of a largest value of Q.

11. The method of claim 5 or 6, wherein,
elements in the value set of Q comprise 2, 4, 8, 16; or
elements in the value set of Q comprise 4, 8, 16, 32; or
elements in the value set of Q comprise 8, 16, 32, 64.

12. The method of claim 5 or 6, wherein,
elements in the value set of Q comprise 3, 4, 6, 12; or
elements in the value set of Q comprise 3, 6, 9, 18; or
elements in the value set of Q comprise 4, 5, 10, 20; or
elements in the value set of Q comprise 6, 8, 12, 24; or
elements in the value set of Q comprise 6, 10, 15, 30; or
elements in the value set of Q comprise 9, 12, 18,, 36; or
elements in the value set of Q comprise 5, 10, 20, 40; or
elements in the value set of Q comprise 12, 16, 24, 48; or
elements in the value set of Q comprise 9, 18, 27, 54; or
elements in the value set of Q comprise 15, 20, 30, 60.

13. The method of claim 5 or 6, wherein elements in the value set of Q at least comprise 1, a largest value of Q, or, first two or three largest factors of a largest value of Q.

14. The method of claim 5 or 6, wherein,
elements in the value set of Q comprise 1, 4, 8, 16; or
elements in the value set of Q comprise 1, 4, 16, 32, or, 1, 8, 16, 32; or
elements in the value set of Q comprise 1, 8, 32, 64, or, 1, 16, 32, 64.

15. The method of claim 5 or 6, wherein,
elements in the value set of Q comprise 1, 3, 6, 12, or, 1, 4, 6, 12; or
elements in the value set of Q comprise 1, 3, 9, 18, or, 1, 6, 9, 18; or
elements in the value set of Q comprise 1, 4, 10, 20, or, 1, 5, 10, 20; or
elements in the value set of Q comprise 1, 4, 12, 24, or, 1, 6, 12, 24, or, 1, 8, 12, 24; or
elements in the value set of Q comprise 1, 5, 15, 30, or, 1, 6, 15, 30, or, 1, 10, 15, 30; or
elements in the value set of Q comprise 1, 6, 18, 36, or, 1, 9, 18, 36, or, 1, 12, 18, 36; or
elements in the value set of Q comprise 1, 4, 20, 40, or, 1, 5, 20, 40, or, 1, 10, 20, 40; or
elements in the value set of Q comprise 1, 8, 24, 48, or, 1, 12, 24, 48, or, 1, 16, 24, 48; or
elements in the value set of Q comprise 1, 6, 27, 54, or, 1, 9, 27, 54, or, 1, 18, 27, 54; or
elements in the value set of Q comprise 1, 12, 30, 60, or, 1, 15, 30, 60, or, 1, 20, 30, 60.

16. An apparatus for processing data, comprising:
an obtaining module, configured to obtain a signaling;
a processing module, configured to obtain a value of a quasi co-location parameter Q based on the signaling.

17. A terminal device, comprising: at least one processor and a memory; wherein,
the memory stores computer instructions; and
the at least one processor executes the computer instructions stored in the memory, to enable the at least one processor to execute the method of any one of claims 1-15.

18. A computer readable storage medium storing computer instructions, wherein, when a processor executes the computer instructions, the processor executes the method of any one of claims 1-15.
